# EUROPÄISCHE PATENTSCHRIFT

(11) **EP 1 215 222 B1**
(45) Veröffentlichungstag und Bekanntmachung des Hinweises auf die Patenterteilung: **14.09.2005**
(21) Anmeldenummer: 01126267.2
(22) Anmeldetag: 06.11.2001
(51) Int. Cl.: C08G 18/08, C08G 18/38, C08G 18/64, C08G 18/66, C08G 18/78, C09D 175/04, C08K 5/3492

(54) **Intumeszierende Zweikomponenten-Polyurethananstriche**
Intumescing two component polyurethane coatings
Vernis de polyuréthane ignifuges à deux composants

(30) Priorität: 14.12.2000 AT 20762000
(43) Veröffentlichungstag der Anmeldung: 19.06.2002
(73) Patentinhaber: INTUMEX GmbH, 4021 Linz (AT)
(72) Erfinder: Horacek, Heinrich, 4040 Linz (AT)
(74) Vertreter: Lindinger, Ingrid

(56) Entgegenhaltungen:
- GB-A- 1 317 843
- PATENT ABSTRACTS OF JAPAN vol. 014, no. 435 (C-0760), 18. September 1990 (1990-09-18) & JP 02 170854 A (DAINIPPON INK & CHEM INC), 2. Juli 1990 (1990-07-02)
- PATENT ABSTRACTS OF JAPAN vol. 1999, no. 08, 30. Juni 1999 (1999-06-30) & JP 11 060938 A (HITACHI CHEM CO LTD), 5. März 1999 (1999-03-05)

## Beschreibung

Die vorliegende Erfindung betrifft intumeszierende Zweikomponenten-Polyurethananstriche und deren Verwendung als Stahlbeschichtung.

Intumeszierende Anstriche sind im allgemeinen schon seit vielen Jahren, beispielsweise aus Encyclopedia of Polymer Science and Engineering (1987), John Wiley/New York, Vol. 7 "Flammability" p.193f, bekannt, wobei mehrere Verbindungsklassen für viele Formulierungen gleich sind. Diese Verbindungsklassen beinhalten latente Säuren, wie etwa Ammoniumphosphate und Zinkborat, die bei erhöhter Temperatur aktiviert werden, einen Kohlenstofflieferanten, wie etwa Pentaerythrit oder andere Polyole , ein Treibmittel, wie Harnstoff, Melamin oder Dicyandiamid, einen Flammhemmer, wie Alkylhalogenphosphate oder Organohalogene, und ein Bindemittel, das normalerweise ein leicht vernetztes oder thermoplastisches Polymer ist. Gemäß obiger Literaturstelle sind diese Anstriche jedoch sehr teuer und werden nur für Sonderfälle verwendet. Als weiterer Nachteil von intumeszierenden Beschichtungen bzw. Anstrichen wird angegeben, dass die Temperatur, bei der sie einen hitzeisolierenden Schaumstoff bilden, über der Erweichungstemperatur der meisten Thermoplasten liegt.
In Flame Retardancy of Polymeric Materials, Vol.4 ed. W. C. Kuryla, A. J. Papa, Marcel Dekker Inc. (1978), New York, p 101 ist eine klare, intumeszierende Polyurethan-Beschichtung beschrieben, die Polyurethan, erhalten aus Pentachlorphenoxyglycerolether, Triethylenglykol und Toluoldiisocyanat in einem Lösungsmittel, enthält. Die Nachteile bei diesem Anstrich bzw. bei dieser Beschichtung sind, dass der sich bei Feuereinwirkung bildende, feuerhemmende Schaum nur eine schwache Struktur aufweist, und dass er Polyaminhydrochloridsalze, die sich bei der Zersetzung des Polyurethans bilden, enthält.
DE 42 18 184 beschreibt ein wässriges Bindemittelgemisch, bestehend aus einer wässrigen Lösung und/oder Dispersion einer Kombination aus a) mindestens einem in Gegenwart der Komponente b) in Wasser löslichen und/oder dispergierbaren Urethangruppen aufweisenden NCO-Vorpolymer mit blockierten Isocyanatgruppen und b) einer Polyamin-Komponente, bestehend aus mindestens einem (cyclo)aliphatischen Polyamin mit mindestens zwei primären und/oder sekundären Aminogruppen.
Aus DE 43 43 668 sind weiters aufblähbare, flammhemmende Überzugsmassen, bestehend aus einem filmbildenden Bindemittel, Ammoniumpolyphosphat, mindestens einer bei Hitzewirkung carbonisierenden Substanz, Treibmittel, Dispergiermittel und Füllstoffe, bekannt.
Nachteilig bei den beiden vorgenannten Brandschutzbeschichtungen ist insgesamt, dass sie halogenhaltig sind und/oder nach Trocknung keine ausreichende Wasserfestigkeit aufweisen, wie etwa in DE 199 09 387 beschrieben wird. In DE 199 09 387 wird weiters darauf hingewiesen, dass Melamin und Ammoniumpolyphosphat in wässrigen Lösungen unter Freisetzung von Ammoniak reagieren und dass diese Reaktion auch in einer getrockneten dämmschichtbildenden Brandschutzbeschichtung in Gegenwart von erhöhten Temperaturen und erhöhter Luftfeuchtigkeit stattfinden und somit die brandschutztechnischen Eigenschaften der Beschichtung reduzieren. Gemäß DE 199 09 387 wird dies durch die Verwendung von Melaminpolyphosphat als Treibmittel vermieden. Auch dieses System verwendet Lösungsmittel.

Aufgabe der vorliegenden Erfindung war es, intumeszierende Anstriche zu finden, bei welchen die Trocknungszeit zwischen wenigen Sekunden und mehreren Stunden je nach Wunsch eingestellt werden kann, die lösungsmittelfrei sind und die sich als Anstrich zur Stahlbeschichtung eignen.

Unerwarteterweise wurde nun gefunden, dass durch die Verwendung von schwach vernetzten oder thermoplastischen Zweikomponenten-(2-K)-Polyurethanen als Bindemittel für intumeszierende Anstriche diese Aufgabe gelöst werden konnte.

Gegenstand der Erfindung sind demnach intumeszierende Zweikomponenten-Polyurethananstriche, die dadurch gekennzeichnet sind, dass sie aus
a) einem Bindemittel, enthaltend eine Polyolkomponente und eine Polyisocyanatkomponente,
b) Intumeszenzadditiva und
c) anorganischen Füllstoffen bestehen.

Die erfindungsgemäßen intumeszierenden Zweikomponenten-Polyurethananstriche setzten sich aus drei Hauptbestandteilen zusammen.
Als Bindemittel fungiert ein schwach vernetztes oder thermoplastisches Zweikomponenten-Polyurethan (PUR-2K) aus einer Polyol- oder A-Komponente und einer Polyisocyanat- oder B-Komponente.

Als Polyol- oder A-Komponente eignen Polyole mit einer Funktionalität zwischen 2 und 3. Beispiele dafür sind Polyetherole wie Polyproypylenglykole, Polyethylenglykole, Polypropylenglykole mit Ethylenglykolendgruppen, Polybutadiene mit Hydroxylendgruppen, Polytetrahydrofurane, Polyesterole aus aliphatischen Alkoholen, wie Ethylenglykol, Triethylenglykol, Butandiol, Hexandiol, und Dicarbonsäuren, wie Adipinsäure, Sebazinsäure, Azelainsäure, Phthalsäureanhydrid, Isophthalsäure, Ölsäure, 2-Ethylhexansäure, die als Handelsprodukte, gegebenenfalls mit diversen Zusätzen, mit unterschiedlichen OH-Zahlen und Funktionalitäten von vielen Firmen erhältlich sind. Beispiele dafür sind Lupranol 2042 (Polyetherol; Fa. BASF; OHZ=25; f=3;), Lupraphen VP 6069 (Polyesterol; Fa. BASF, 88 Teile Lupraphen VP 9031, OHZ=56, f=2; + 9Teile Butandiol + 3 Teile Zeolith T 50%ig), Lupranol 1000 (Polyetherol; Fa. BASF; OHZ=58; f=2), Lupranol 2043 (OHZ= 29, f= 2), Pluracol P 2000 (Polypropylenglykol OHZ = 56, Pluriol E 1500 (Polyethylenglykol), Polytetrahydrofuran PTHF 2000 (OHZ = 56, f= 2), Desmophen 2000 M (Polyesterol der Fa. Bayer, OHZ= 56, f = 2) und Caradol 42/2 (Polyetherol der Fa. Shell (OHZ = 42, f = 3), sowie Liquiflex H ein hydroxylgruppenhaltiges Polybutadien der Fa. Petroflex Industria e Comercia S.A.).

Als Polyisocyanat- oder B-Komponente eignen sich Polyisocyanate mit einer Funktionalität von 2-3. Als Ausgangsbasis dienen dabei vor allem die großtechnisch leicht zugänglichen Diisocyanate Toluylendiisocyanat (TDI), Diphenylmethandiisocyanat (MDI), Hexamethylendiisocyanat (HMDI),'4,4'Diisocyanatodicyclohexylmethan, 2, 2', 4-(2,2,4) - Trimethylhexamethylendiisocyanat, Dimeryldiisocyanat, Lysindiisocyanat, trans - 1,4 Cyclohexyldiisocyanat, 1,4-Bisisocyanatomethylcyclohexan und Isophorondiisocyanat (IPDI). Diese Diisocyanate können als solche eingesetzt werden, sie können aber auch in höhermolekulare Polyisocyanate überführt werden. Beispiele für höhermolekulare Polyisocyanate sind solche die aus Diisocyanaten und Polyolen, wie Ethylenglykol., Diethylenglykol, Thiodiproyplenglykol, Dipropylenglykol, Butandiol und Propylenglykol ("Urethan-Polyisocyanate), durch Trimerisation (Isocyanurat-Polyisocyanate) oder aus Diisocyanaten durch Molekülvergrößerung über Biuret-Bindungen (Biuret-Polyisocyanate) entstehen.
Die Polyisocyanate sind ebenfalls als Handelsprodukte von verschiedenen Anbietern, mit unterschiedlicher NCO-Prozentzahl erhältlich, wie etwa Desmodur N (urethanisiertes, biuretisiertes HMDI; Fa. Bayer; NCO = 23%; f = 3), Lupranat MP 102 (Rein-MDI mit Ethylenglykol; Fa. BASF; NCO = 23%; f =2) Lupranat M 20 (Roh-MDI; Fa. BASF; NCO = 31%; f= 2,3) Caradate 30 (Roh-MDI; Fa. Shell; NCO = 31 %, f= 2,2;).

Komponente A und Komponente B bilden zusammen das Bindemittel. Dabei ist zu beachten, dass eine der beiden Komponenten die Funktionalität f =2 aufweisen sollte und die Funktionalität der zweiten Komponente bei max. f = 3 liegt, sodass gewährleistet wird, dass ein leicht vernetztes oder thermoplastisches Polyurethan erhalten wird.
Dabei werden Komponente A und Komponente B, in einem solchen Gewichtsverhältnis eingesetzt, daß die Kennzahl, die durch das Verhältnis der Äuquivalente Isocyanat zu Äquivalenten Polyol gegeben ist, zwischen 0,9- 1,15 oder bevorzugt zwischen 1,00 und 1,05 liegt. Das aus den beiden Komponenten bestehende Bindemittel kann gegebenenfalls unter Zusatz von wasserbindenden Mitteln, beispielsweise vom Zeolith-Typ , Monoisocyanate, Borsäureester, Oxazolidine, Acetessigsäureester, Malonsäureester oder Caprolactam, hergestellt werden.
Ferner können den beiden Komponenten herkömmliche Zusätze, wie etwa Antioxidantien , wie 2,6 Ditert.butyl-p-cresol; Stabilisatoren, wie Irganox 1010 , Haftvermittler, wie Silane; Weichmacher, wie Phthalsäure oder Phosphorsäureester; Silikonöle als Entschäumer, Katalysatoren, wie Dibutylzinnlaurat, Dabco oder Niax A-1, und Flammhemmer, wie Trischlorpropylphosphat, Trisbutoxylethylphosphat, Tris-(2-ethylhexyl) phosphat, zugesetzt werden. Bevorzugt werden diese Zusätze nur Komponente A zugemischt.

Der erfindungsgemäße intumeszierende Zweikomponenten-Polyurethananstrich enthält neben dem Bindemittel noch Intumeszenzadditive.
Hierfür eignen sich Ammoniumverbindungen, wie etwa Ammoniumpolyphosphat, Ammoniumdihydrogenphosphat, Ammoniumpentaborat, Melamin, Dicyandiamid, vollständige Phosphorsäureester, wie etwa NH 1197 und NH 1511 von Fa. Great Lakes, Bicyclopenterythritphosphat, Aluminiumhydrogenphosphat, Trishydrazinotriazinphosphat, Expancel der Fa. AKZO und Cyclotherm der Fa. Cyclotec.
Die Intumeszenzadditiva (C) werden sowohl der Polyolkomponente A, als auch der Polyisocyanatkomponente B oder nur der Polyolkomponente zugesetzt.
Im fertigen Gemisch (A + B + C) beträgt der Gewichtsanteil von C zwischen 30 und 70%.

Als weiterer Bestandteil des erfindungsgemäßen PUR-2K-Anstriches dienen anorganische Füllstoffe. Dazu eignen sich Titandioxid, Zinkborat, Quarz, Ton, Zinkoxid, Talkum, Calziumsilikate, Emaile und Fritten, sowie Mischungen davon. Der Füllstoff wird dabei in einer Menge 5 bis 30 Gew% bezogen auf die fertige Mischung, die alle Einsatzstoffe enthält, zugesetzt.

Bei der Herstellung des erfindungsgemäßen Anstriches werden bevorzugt zuerst Intumeszenzadditiva und Füllstoff zu einer feinteiligen Pulvermischung vermischt. Anschließend wird Komponente A, die gegebenenfalls einen oder mehrere der oben beschriebenen Zusätze enthält, sowie gegebenenfalls Komponente B in dem gewünschten Verhältnis mit der Pulvermischung aus Intumeszenzadditiva und Füllstoff vermischt. Bei längeren Lagerzeiten wird neu aufgerührt oder umgepumpt.
Die Komponenten A und B liegen getrennt vor und werden erst am Ort der Anwendung mittels eines Zweikomponentenspritzgerätes in der Düse zusammengeführt.

Die erfindungsgemäßen PUR-2K-Anstriche bestehen demnach aus 10 -50% Polyurethan- Bindemittel, 10- 60% Intumeszenzadditiva und aus 5- 30 % anorganischen Füllstoffen, wobei die Summe der Bestandteile 100% beträgt.

Bevorzugt bestehen die erfindungsgemäßen Anstriche aus 30-40% Polyurethan-Bindemittel, 45-55% Intumeszenzadditiva und 10-20% anorganische Füllstoffe.

Je nach Mischungsverhältnis der Komponenten A bzw. B zu Pulvermischung und nach Mischungsverhältnis der Komponente A zu Komponente B können die Eigenschaften des erfindungsgemäßen Anstriches variiert werden. So kann beispielsweise, je nach Bedarf, die Trocknungs- bzw. Klebfreizeit zwischen wenigen Sekunden und mehreren Stunden eingestellt werden, da die bisher gemäß dem Stand der Technik üblichen Wartezeiten für das Verdunsten des Wassers oder Lösungsmittels entfallen. Ein weiterer Vorteil des erfindungsgemäßen PUR-2K-Anstriches besteht darin, dass sie 100% Feststoff enthalten und damit die Nass- und Trockenfilmdicken praktisch ident sind. Die erfindungsgemäßen PUR-2K-Anstriche zeichnen sich zusätzlich dadurch aus, dass ihre Eigenschaften, wie Abrieb, Filmhärte, Filmelastizität, Aufschäumverhalten und Schaumstoffstabilität, variiert werden können.
Die erfindungsgemäßen Anstriche eignen sich hervorragend zur Beschichtung und zum Schutz von Stahl bzw. Stahlbauteilen. Der Auftrag der Beschichtung bzw. des Anstriches erfolgt über übliche 2-K-Spritzgeräte. Bei langsam eingestellten Anstrichen, mit längerer Trocknungs- bzw. Klebfreizeit, kann die Auftragung auch mittels Pinsel oder Lammfellrolle erfolgen. Nach entsprechender Viskositätseinstellung durch Zugabe von Verdickungsmittel, wie Aerosil ist auch die Verwendung von Spachteln möglich.
Der Anstrich wird dabei in einer Dicke von 0,3 bis 10 mm, bevorzugt von 0,4 bis 8mm und besonders bevorzugt von 0,5 bis 5 mm aufgetragen. Stärkere Filmdicken sind theoretisch auch möglich, bringen aber keine zusätzlichen Vorteile.
Die erfindungsgemäßen Anstriche erreichen bei Filmstärken von 0,5 bis 5mm, bei Auftragung auf klassifizierte Stahlbauteile mit Umfang zu Flächenverhältnissen von 100 bis 500 m zu 1 Feuerwiderstandsdauem von 60 bis 90 Minuten nach DIN 4102 Teil 8 oder ÖNORM 3800 Teil 3 bzw. ENV 13381-1.

### Beispiel 1:

Es wurde eine feinteilige Pulvermischung (Komponente C) aus den festen Intumeszenzadditiven und den anorganischen Füllstoffen auf einem Lödige Mischer hergestellt::

| Einsatzstoffe | Teile |
|---|---|
| Ammoniumpolyphosphat | 40 |
| Melamin | 20 |
| NH 1511 | 20 (Phosphorsäureester, Fa. Great Lakes) |
| Titandioxyd | 20 |

Das Bindemittel wurde aus einer A- und einer B- Komponente hergestellt::

### A-Komponente

| Einsatzstoffe | Teile |
|---|---|
| Lupranol 2042 | 66,2 (Polyetherol, Fa.BASF, OHZ=25, f=3) |
| Ethylenglykol | 26,5 |
| Zeolithpaste T | 4,0 (Fa. Bayer) |
| Dibutylzinndilaurat D22 | 3,3 (Fa. Bärlocher; Katalysator) |

### B-Komponente

### VP 9044 urethanisiertes, biuretisiertes Hexamethylendiisocyanat (HMDI; NCO 23%)

Es wurden 100 Teile der Komponente A mit 200 Teilen Komponente C (ergibt Komponente A') und 175 Teile der Komponente B mit 211 Teilen Komponente C (ergibt Komponente B') vermischt. Als Mischer wurde ein Handrührgerät oder eine Bohrmaschine mit aufgesetztem Flügel- oder Zahnscheibenrührer verwendet.
Anschließend wurde mittels einer Graco 2-K Spritzmaschine ein 1 mm dicker Film auf eine 6mm Stahlplatte gesprüht.

### Beispiel 2:

Analog Beispiel 1 wurde ein weiterer Anstrich mit folgender Zusammensetzung hergestellt:

### A-Komponente:

| Einsatzstoffe | Teile |
|---|---|
| Lupraphen VP 6069 | 100 (88 Teile Lupraphen VP 9013 OHZ 56 9 Teile Butandiol und 3 Teile Zeolith T 50%ig) |
| Dibutylzinnlaurat D22 | 0,3 (Bärlocher, Katalysator) |
| Silikonöl AK 350 | 0,1 (Fa. Goldschmidt, Entschäumer) |

### B-Komponente:

| | |
|---|---|
| Lupranat MP 102 | (Rein-MDI mit Ethylenglykol; NCO=23%, Fa. BASF) |

Analog Beispiel 1 wurden 101 Teile der Komponente A, kombiniert mit 150 Teilen Komponente C aus Beispiel 1, mit 100 Teilen der Komponente B, kombiniert mit 150 Teilen Komponente C aus Beispiel 1, auf einer Graco Maschine versprüht.

### Beispiel 3:

Analog Beispiel 1 wurde ein weiterer Anstrich mit folgender Zusammensetzung hergestellt:

### A-Komponente:

| Einsatzstoffe | Teile |
|---|---|
| Lupranol 1000 | 95 (Polyetherol; Fa. Bayer; OHZ=58, f=3) |
| Zeolith T 50%ig | 4 |
| AK 350 | 0,5 (Silikonöl der Fa. Goldschmidt) |
| Dibutylzinnalurat D22 | 0,5 |

### B-Komponente

| | |
|---|---|
| Lupranant M 20 | (Roh-MDI; NCO=31 %; Fa. BASF) |

Analog Beispiel 1 wurden 100 Teile Komponent A mit 150 Teilen Komponente C aus Beispiel 1 verrührt und mit 22 Teilen Komponente B auf einer Graco- Maschine versprüht.

### Beispiel 4:

Analog Beispiel 1 wurde ein weiterer Anstrich mit folgender Zusammensetzung hergestellt:

### A-Komponente:

| Einsatzstoffe | Teile |
|---|---|
| Caradol 42/2 | 95 (Polyetherol; OHZ=42, f=3, Fa.Shell) |
| Butandiol 1,4 | 5 |
| Zeolithpaste T 50% | 5 |
| Tego KS 6 | 2 (Fa. Goldschmidt, Entschäumer) |
| Dibutylzinndilaurat | 0,5 |

### B-Komponente:

| | |
|---|---|
| Caradate 30 | (Roh-MDI, NCO=31%; Fa. Shell) |

Zu 100 Teilen Komponente A wurden 300 Teile Komponente C aus Beispiel 1 gegeben und diese mit 42 Teilen Komponente B auf einer Graco- Maschine versprüht.

### Vergleichsbeispiel (V1):

Als Vergleich diente ein wässriges 1-K Polyurethansystem

| Einsatzstoffe | Teile |
|---|---|
| Wasser | 17 |
| Melamin | 8,5 |
| Dipentaerythrit | 4 |
| Exolith AP 422 | 25 |
| Titandioxid | 5 |
| Inorphil 020 | 4 |
| Astacin Finish | 28 Polyurethansdispersion BASF |
| Amgard 280 | 8,5 Phosphorsäureester der Fa. Albright + Wilson |

### Beispiel 5:

Alle Anstriche der Beispiele 1-4 und des Vergleichsbeispiels V1 wurden auf einen I-Träger IPE 160 mit U/A =330 in einer Filmdicke von 1mm aufgetragen und die Trockenzeit oder Tack free- time bestimmt. Dann wurden die beschichteten Träger in einen ISO- Brandofen gestellt und die Zeit bestimmt, bis der Träger 500 °C erreichte.

Die Ergebnisse sind in Tab. 1 zusammengestellt:

**Tabelle 1:**

| Beispiel | Tack free time | Zeit bis 500°C erreicht(min) |
|---|---|---|
| V-1 | 2 Tage | 45 |
| 1 | 20 sec | 60 |
| 2 | 30 sec | 90 |
| 3 | 20 sec | 60 |
| 4 | 40 sec | 90 |

## Patentansprüche

1. Intumeszierende Zweikomponenten-Polyurethananstriche, **dadurch gekennzeichnet, dass** sie aus
a) einem Bindemittel, enthaltend eine Polyolkomponente und eine Polyisocyanatkomponente,
b) Intumeszenzadditiva und
c) anorganischen Füllstoffen bestehen.

2. Intumeszierende Zweikomponenten-Polyurethananstriche nach Anspruch 1, **dadurch gekennzeichnet, dass** sie 10 bis 50 Gew.% Bindemittel, 10 bis 60 Gew.% Intumeszenzadditiva und 5 bis 30% an Füllstoffen enthalten.

3. Intumeszierende Zweikomponenten-Polyurethananstriche nach Anspruch 1, **dadurch gekennzeichnet, dass** als Bindemittel ein schwach vernetztes oder thermoplastisches Zweikomponenten-Polyurethan verwendet wird, das sich aus einer Polyolkomponente mit einer Funktionalität zwischen 2 und 3 aus der Gruppe der Polyetherole, Polybutadiene mit Hydroxylendgruppen, Polytetrahydrofurane, Polyesterole aus aliphatischen Alkoholen und Dicarbonsäuren und einer Polyisocyanatkomponente mit einer Funktionalität zwischen 2 und 3 aus der Gruppe der Diisocyanate, der Polyisocyanate aus Diisocyanaten und Polyolen, Polyisocyanate, erhalten durch Trimerisierung und Polyisocyanate, erhalten aus Diisocyanaten durch Molekülvergrößerung über Biuret-Bindungen, zusammensetzt.

4. Intumeszierende Zweikomponenten-Polyurethananstriche nach Anspruch 1, **dadurch gekennzeichnet, dass** die Polyolkomponente und die Polyisocyanatkomponente in einem solchen Gewichtsverhältnis eingesetzt werden, dass die Kennzahl, die durch das Verhältnis der Äquivalente Isocyanat zu Äquivalenten Polyol gegeben ist, zwischen 0,9 und 1,15 liegt.

5. Intumeszierende Zweikomponenten-Polyurethananstriche nach Anspruch 1, **dadurch gekennzeichnet, dass** das Bindemittel gegebenenfalls einen oder mehrere Zusätze aus der Gruppe der wasserbindenden Mittel, Antioxidantien, Stabilisatoren, Haftvermittler, Weichmacher, Entschäumer, Katalysatoren und Flammhemmer enthält.

6. Intumeszierende Zweikomponenten-Polyurethananstriche nach Anspruch 1, **dadurch gekennzeichnet, dass** als Intumeszenzadditiva eine Ammoniumverbindung aus der Gruppe Ammoniumpolyphosphat, Ammoniumdihydrogenphosphat, Ammoniumpentaborat, Melamin, sowie Dicyandiamid, vollständige Phosphorsäureester, Bicyclopenterythritphosphat, Aluminiumhydrogenphosphat oder Trishydrazinotriazinphosphat eingesetzt wird.

7. Intumeszierende Zweikomponenten-Polyurethananstriche nach Anspruch 1, **dadurch gekennzeichnet, dass** als anorganische Füllstoffe Titandioxid, Zinkborat, Quarz, Ton, Zinkoxid, Talkum, Calciumsilikate, Emaile oder Fritten, sowie Mischungen derselben eingesetzt werden.

8. Verwendung von Anstrichen gemäß Anspruch 1 zur Beschichtung und zum Schutz von Stahl oder Stahlbauteilen.

9. Verwendung nach Anspruch 8, **dadurch gekennzeichnet, dass** die Auftragung der Beschichtung, je nach Trocknungs- oder Klebfreizeit des Anstriches gemäß Anspruch 1, durch 2-Komponenten-Spritzgeräte, mittels Pinsel oder Lammfellrolle oder nach entsprechender Viskositätseinstellung durch Zugabe von Verdickungsmitteln mittels Spachteln erfolgt.

10. Verwendung nach Anspruch 8, **dadurch gekennzeichnet, dass** die Beschichtung eine Dicke von 0,3 bis 10mm aufweist.

## Claims

1. Intumescent two-component polyurethane coatings, **characterized in that** they are composed of
a) a binder comprising a polyol component and a polyisocyanate component,
b) intumescence additives and
c) inorganic fillers.

2. Intumescent two-component polyurethane coatings according to Claim 1, **characterized in that** they contain 10% to 50% by weight of binder, 10% to 60% by weight of intumescence additives and 5% to 30% of fillers.

3. Intumescent two-component polyurethane coatings according to Claim 1, **characterized in that** as binder a two-component polyurethane is used which is thermoplastic or has a low degree of crosslinking and is composed of a polyol component having a functionality of between 2 and 3, from the group consisting of polyetherols, polybutadienes with hydroxyl end groups, polytetrahydrofurans, polyesterols of aliphatic alcohols and dicarboxylic acids and of a polyisocyanate component having a functionality of between 2 and 3 from the group consisting of diisocyanates, polyisocyanates, of diisocyanates and polyols, polyisocyanates obtained by trimerization and polyisocyanates obtained from diisocyanates by molecular enlargement via biuret bonds.

4. Intumescent two-component polyurethane coatings according to Claim 1, **characterized in that** the polyol component and the polyisocyanate component are used in a weight ratio such that the characteristic number given by the ratio of equivalents of isocyanate to equivalents of polyol is between 0.9 and 1.15.

5. Intumescent two-component polyurethane coatings according to Claim 1, **characterized in that** the binder optionally comprises one or more additives from the group consisting of water-binding agents, antioxidants, stabilizers, adhesion promoters, plasticizers, defoamers, catalysts and flame inhibitors.

6. Intumescent two-component polyurethane coatings according to Claim 1, **characterized in that** as intumescence additives use is made of an ammonium compound from the group consisting of ammonium polyphosphate, ammonium dihydrogen phosphate, ammonium pentaborate, melamine, and dicyandiamide, full phosphoric esters, bicyclopentaerythrityl phosphate, aluminium hydrogen phosphate or trishydrazinotriazine phosphate.

7. Intumescent two-component polyurethane coatings according to Claim 1, **characterized in that** inorganic fillers used are titanium dioxide, zinc borate, quartz, clay, zinc oxide, talc, calcium silicates, enamels or frits and mixtures thereof.

8. Use of coatings according to Claim 1 for coating and for protecting steel or steel components.

9. Use according to Claim 8, **characterized in that** the coating, in accordance with the drying time or tack-free time of the coating according to Claim 1, is applied by means of 2-component spraying equipment, by brush or lambskin roller, or, following appropriate adjustment of viscosity, by addition of thickeners, by means of trowels.

10. Use according to Claim 8, **characterized in that** the coating has a thickness of 0.3 to 10 mm.

## Revendications

1. Peintures polyuréthannes à deux composants intumescentes, **caractérisées en ce qu'**elles sont composées de
a) un liant, comprenant un composant polyol et un composant polyisocyanate,
b) des additifs intumescents et
c) des charges inorganiques.

2. Peintures polyuréthannes à deux composants, intumescentes selon la revendication 1, **caractérisées en ce qu'**elles contiennent 10 à 50 % en poids de liant, 10 à 60 % en poids d'additif intumescent et 5 à 30 % en poids de charges.

3. Peintures polyuréthannes à deux composants, intumescentes selon la revendication 1, **caractérisées en ce qu'**un polyuréthanne thermoplastique à deux composants faiblement réticulé ou thermoplastique est utilisé en tant que liant, lequel se compose d'un composant polyol avec une fonctionnalité entre 2 et 3 choisi dans le groupe comprenant les polyéthers-alcools, les polybutadiènes avec des groupes terminaux hydroxyles, les polytétrahydrofurannes, les polyesters-alcools à partir d'alcools aliphatiques et d'acides dicarboxyliques et d'un composant polyisocyanate avec une fonctionnalité entre 2 et 3 choisi dans le groupe comprenant les diisocyanates, les polyisocyanates obtenus à partir de diisocyanates et de polyols, polyisocyanates obtenus par trimérisation et polyisocyanates obtenus par accroissement de la molécule par réaction du biuret.

4. Peintures polyuréthannes à deux composants, intumescentes selon la revendication 1, **caractérisées en ce que** le composant polyol et le composant polyisocyanate sont utilisés dans un rapport pondéral tel que l'indice, donné par le rapport équivalent isocyanate/équivalent polyol, se situe entre 0,9 et 1,15.

5. Peintures polyuréthannes à deux composants, intumescentes selon la revendication 1, **caractérisées en ce que** le liant comprend le cas échéant un ou plusieurs additifs choisis dans le groupe comprenant les produits hygroscopiques, les antioxydants, les stabilisants, les promoteurs d'adhérence, les plastifiants, les anti-mousses, les catalyseurs et les agents retardateurs de flamme.

6. Peintures polyuréthannes à deux composants, intumescentes selon la revendication 1, **caractérisées en ce qu'**un composé à base d'ammonium choisi dans le groupe comprenant le polyphosphate d'ammonium, le dihydrogénophosphate d'ammonium, le pentaborate d'ammonium, la mélamine, ainsi que le dicyandiamide, l'ester de l'acide phosphorique concentré, le phosphate de bicyclopentérythritol, l'hydrogénophosphate d'aluminium ou le phosphate de tris(hydrazino)triazine, est utilisé en tant qu'additif intumescent.

7. Peintures polyuréthannes à deux composants, intumescentes selon la revendication 1, **caractérisées en ce que** le dioxyde de titane, le borate de zinc, le quartz, l'argile, l'oxyde de zinc, le talc, le silicate de calcium, l'émail ou la matière frittée, et leurs mélanges sont utilisés en tant que charge inorganique.

8. Utilisation de peintures selon la revendication 1 pour revêtir et protéger l'acier ou des pièces de structures en acier.

9. Utilisation selon la revendication 8, **caractérisée en ce que** l'application de la couche s'effectue, en fonction du temps de séchage ou du temps ouvert de la peinture selon la revendication 1, à l'aide d'un appareil de pulvérisation pour deux composants, à l'aide d'un pinceau ou d'un rouleau en peau de mouton ou après une mise au point approprié de la viscosité par l'ajout d'agent épaississant à l'aide d'une spatule.

10. Utilisation selon la revendication 8, **caractérisée en ce que** la couche présente une épaisseur de 0, 3 à 10 mm.
